# EUROPEAN PATENT SPECIFICATION

(11) **EP 1 168 749 B1**
(45) Date of publication and mention of the grant of the patent: **16.08.2006**
(21) Application number: 00113530.0
(22) Date of filing: 26.06.2000
(51) Int. Cl.: H04L 29/06

(54) **Firewall apparatus**
Firewall-Vorrichtung
Dispositif pare-feu

(43) Date of publication of application: 02.01.2002
(73) Proprietor: Tenovis GmbH & Co. KG, 60362 Frankfurt am Main (DE)
(72) Inventor: Schlesinger, Jürgen, 64572 Buettelborn (DE); Rohrdrommel, Dieter, 63477 Maintal (DE); Roedig, Utz, 62483 Darmstadt (DE)
(74) Representative: Walkenhorst, Andreas

(56) References cited:
- EP-A- 0 909 073
- D BRENT CHAPMAN AND ELIZABETH D ZWICKY: "Building Internet Firewalls" , BUILDING INTERNET FIREWALLS,XX,XX, PAGE(S) 57-90,200-202,250-260 XP002112428 * page 57, 2 last lines * * page 65 - page 66; figures 4-4 *

## Description

### Background of the invention

The invention relates to a firewall apparatus for controlling network data packet traffic between an internal and an external network.

A Firewall is a widely used security mechanism to provide access control and auditing at the border between "open" and private networks or administrative domains.

So the European Patent Application EP 0 909 073 A2 proposes a firewall with a proxy, where the firewall can be instructed to redirect a network session to a separate server for processing to unburden the firewall of application proxies. In addition, the firewall can be configured to utilize "stateful" packet filtering, a method at which the results of rule processing applied to one or more packets are stored to be used for subsequent packets.

As part of the network infrastructure firewalls are strongly affected by the development of new communication paradigms and applications. Currently existing firewall apparatuses have problems supporting multimedia applications.

### Advantages of the invention

The invention according to the features of the independent claim has the advantage that multimedia applications are better supported by the firewall apparatus. Multimedia applications use continuous media and discrete media data, with the continuous media being audio and / or video streams that demand a high throughput and compliance to real-time specifics like a bounded delay or jitter. The discrete media usually consists of control data streams for the audio and video data streams and additional information (e.g. meta data). The components of the firewall apparatus according to the invention are able to autonomously adapt to or influence other components to adapt their individual configuration. It is possible to coherently control the state of the whole firewall system according to the requirements of the current communication situation or state. According to the invention it is also possible to route packet streams individually through the firewall system or firewall apparatus.

Furthermore, it is advantageous that said firewall components comprise filtering means and routing means, that said filtering means and said routing means are implemented as filters extracting information from the application layer (stateful filters) and that said routing means are implemented as at least one proxy. Thus, the invention combines the advantages of different firewall techniques.

Furthermore, it is advantageous that said firewall apparatus provides exchange means to exchange firewall data between said firewall components, where the firewall data are distinct from the network data. Thus, the firewall apparatus is adaptable dependent to the communication state and/or the type of network data.

Furthermore, it is advantageous that a flow of multiple network data packets is split transparently by the filtering means and that said flow of multiple network data packets is reassembled transparently by the filtering means. Thus, e.g. control channels can be separated from the data channels and can then be treated differently and by well-situated, dynamically loadable and extensible components.

Furthermore, it is advantageous that each firewall component is interconnected with each other. Thus the components are easily connectable and can communicate with each of the other components.

Furthermore, it is advantageous that said firewall apparatus comprises one central component and at least two other components, where the central component is interconnected with each of the other components. Thus, the components do not have to find each other and keep track about the state of each component. Additionally the maximum number of possible communication relations is less. Furthermore, compatibility problems are more easily avoidable.

Furthermore, it is advantageous that said firewall apparatus provides a registration mechanism in order to add another component to said firewall apparatus. The core or central component is then able to provide a location mechanism which enables the components to find each other.

Furthermore, it is advantageous that at least one of the firewall components is provided as an IP-filter-adapter. Thus, IP-packets can be transmitted through the firewall apparatus.

Furthermore, it is advantageous that at least one of the firewall components is provided as an IP-telephony-proxy-adapter. Thus, IP-Telephony and especially H.323-proxy functionality is available for the firewall apparatus.

### Drawings

The invention is shown in the drawings and described in detail in the following description.
Figure 1 shows a first embodiment of a firewall architecture according to the present invention.
Figure 2 shows a second embodiment of a firewall architecture according to the present invention.
Figure 3 shows a third embodiment of a firewall architecture according to the present invention.
Figure 4 shows a communication example in detail

### Description of the preferred embodiment

Before discussing the details of the invention reference is made to state of the art solutions and definitions which will be used later for describing the firewall architecture of the invention.

Firewalls are a widely used security mechanism to provide access control and auditing at the border between "open" and private networks or administrative domains. As part of the network infrastructure they are strongly affected by the development and deployment of new communication paradigms and applications.

With the rise of multimedia applications new challenges occur to firewall architectures. Multimedia applications differ in many aspects from "traditional applications", for example concerning bandwidth usage, dynamic protocol elements or multiple data flows for one application session. Corresponding firewall mechanisms and techniques did not change with the same dynamics though. Currently existing firewalls have problems supporting these new type of applications because to some extent they try to map the new characteristics to the manner of conventional applications which they are able to handle.

Security aspects become more and more important and access control at the network border is considered essential. Therefore, most organizations replaced their basic internet routers by devices that perform additional packet-filtering. This option is cost effective, because most routers are able to perform packet-filtering tasks anyway and the functionality has just to be activated. For some institutions, however, this level of security may be insufficient. Packet filters usually just do a pattern matching on predefined fields within the packet (header) but do not pay attention on the semantics of the packets payload which represents application specific data.

A more sophisticated method that can be used to control the communication over a network border are so called "stateful filters". They act like a filter, but they are also able to extract information from the application layer and may change their behavior according to what passed through them in advance.

For higher security, users must consider additional options and have to augment packet filter security with proxying. A proxy server offers additional security because the session flow is retained, inspected and forwarded at the application layer. Many firewall vendors prefer stateful filters instead of proxies because that way it is easier to implement support for new protocols. Furthermore filters generally allow for better performance.

To combine the advantages of all these firewall techniques a mix of packet filters, stateful filters and proxies is often utilized. The combination of these elements or components as is called a conventional or standard firewall system .

In this scenario, communication between the internal and the external network is only possible by passing data through both filters and the proxy. To enforce the hosts to not communicate directly but only via the proxy, the filters are configured in a way that only packets sent from or to the proxy server are forwarded. Applications that access a server in the other network have to be configured to use the proxy server either explicitly or by means of an element providing address and/or port translation. The area between the two filters is usually called demilitarized zone (DMZ).

Under certain circumstances, however, the protection is consciously weakened - hazarding obvious security risks. This is usually done if such a practice seems to be the only applicable short-term way to use a certain service at all. Some non-representative examples are given below:

Some applications complicate the use of a proxy since they were designed and implemented for end systems communicating directly. So they transmit, for instance, lower layer addresses as part of their application specific payload data again. In this case, the firewall filters may be configured to selectively pass data streams directly to the external net and vice versa. The same is necessary if no proxy is implemented (yet) for an application.

Firewall components in conventional firewall architectures are not designed to support multicast communication. To use applications which demand multicast, the security policy of the firewall must usually be weakened on a "all-or-nothing" basis. This conflicts with the intended policy to handle data streams at a firewall individually and with a fine-grained granularity.

For many of so called multimedia applications, the firewall system has to be configured in a way that does not provide the maximum possible protection for the internal network.

Multimedia applications use continuous media and discrete media data, with the continuous media being audio and/or video streams that demand a high throughput and compliance to real-time specifics like a bounded delay or jitter. The discrete media usually consists of control data streams for the audio and video data streams and additional information (e.g. meta data).

In order to describe communication scenarios, the following terms are defined to distinguish the granularity at which the data stream of an application is considered. A "flow" is a single data stream, identified by a tuple of characteristic values (source address, source port, destination address, destination port, protocol number). The term "channel" is used to describe a single data stream and will be used here synonymously. A "session" describes the association of multiple flows that together form the data stream of an application.

The protocol behavior of typical multimedia applications may be generalized in the following manner: A client typically connects to a server using an initial direct TCP or UDP "connection", often called control channel. After control channel setup, the multimedia application opens one or more data channels to transmit audio or video data. The port numbers used for these data channels are dynamically negotiated on the control channel.

Some multimedia applications do not only use a unicast data channel to send the requested data but make use of multicast mechanisms to reach several clients in a very effective manner. Additionally, if the intermediate network supports these option, the server and client could negotiate QoS (Quality of service) parameters to ensure that time critical content can be transmitted through intermediate nodes as desired.

Multimedia applications differ from traditional applications in many characteristics. Especially the following issues cause problems in a network which is protected by a firewall:

Multiple flows for one logical session: The audio and video content is in most cases sent using additional TCP or UDP flows separate from the control data. Sender and receiver are "connected" by several flows though there is only one logical session between them.

Dynamic behavior: Many of the connection parameters are not fixed and therefore possibly unknown when the communication starts. As an example, the number of audio or video streams, the bandwidth needed to transmit the streams or the TCP and UDP ports used for the streams could be initially unknown. Intermediate systems like firewalls have to consider that fact and do probably have to adapt to this dynamic behavior.

Complex protocols: The Protocols used to control multiple flows and the dynamic communication are usually more complex than those used for a static flow. Firewalls and especially proxies do observe the communication and may benefit from interpreting the semantics of the communication protocols.

Data rate and required throughput: The increased data rate and data volume which characterizes multimedia applications demands higher network but also transfer node performance.

Firewalls have to explicitly cope with this fact to prevent transmission bottlenecks.

QoS: The transmission of continuous media typically requires a guaranteed quality (e.g. described in terms of bandwidth or delay). When using the current IETF (Internet Engineering Fark Force) IntServ (Integrated Services) approach these are insured by means of explicitly requesting and keeping resource reservations. A firewall as a network element should not hinder the corresponding protocols and could even actively take part in resource reservations. The same applies to the use of the DiffServ (Differentiated Services) approach where QoS specific operations are especially performed at edge nodes which could coincident with firewall systems.

Multicast: Many multimedia applications use multicast communication to transmit audio and video content. To ensure a handling of data streams at a fine granularity, the components of a firewall system have to individually relay multicast streams. Firewall systems therefore need additional mechanisms to determine which multicast groups should be relayed.

The firewall apparatus according to the invention is designed especially to cope with problems caused by the first four aspects.

Multimedia applications negotiate the number and the specifics (e.g. port numbers) of most of the data channels dynamically. Therefore, these applications require intermediate systems which are capable to adapt to the current communication situation or communication state. Bearing in mind that, in a conventional firewall architecture,
- only the central component in the system, the proxy, has these capabilities (to adapt to the current communication state),
- the proxy is able to recognize the flow allocation commands of the applications based on the information transmitted via the control channels,
- according to an appropriate interpretation of the flow allocation commands, the proxy relays the communication paths towards the communication endpoints (filters) at the border of the DMZ (that are themselves not involved in this dynamic adaptation to the situation),
- the edge components or filters (at the border of the firewall) have to be configured to let all possible connections to and from the proxy pass through,
the maximum protection mode is not realizable.

To overcome these drawbacks, the present invention therefore provides a firewall architecture, where all components or at least a multitude of the components of a firewall system should be able to autonomously adapt or should allow other components to influence and change their individual configuration. In that case there must be mechanisms to coherently control the state of the whole firewall system according to the requirements of the current communication situation or communication state. To reach that goal, firewall components should be able to dynamically pass information to other firewall components.

Conventional firewall systems have furthermore the drawback, especially in a multimedia scenario, that every packet is sent through all of the firewall components, e.g. two filters and one proxy. This reduces the performance and limits the amount of connections that can be sent through the system.

The present invention in contrary provides a firewall apparatus where packet streams are routed individually through the firewall system. As an example, control channels should be separated from the data channels and can then be treated differently and by different well-suited, dynamically loadable and extensible components.

To realize the caracteristic that all components or at least a part of the components of a firewall system are be able to autonomously adapt or allow other components to influence their individual configuration it is firstly possible to provide at least a part of the components with additional functionality so that they are able to analyze the semantics of the communication at all protocol layers. So both filters and the proxy have to be replaced by "stateful filters". In this case all components can adapt their configuration to the current communication state. Therefore, they use information that they have retrieved themselves from the observed communication paths.

A second possibility to provide adaptability of components is to enable the communication between the components. By communicating, a component can distribute information (about a stream, or commands to adapt to a stream) to other components. In this case the configuration of all components can be adapted by themselves or by other components. Therefore, the components can use information that they retrieve themselves from the observed communication paths (if this information is sufficent) or information that is retreived from another component and is distributed to them.

To provide an enhancement of the security of the overall system, the second approach is preferred, where a central and consistent view of the policy engine is maintained.

Also, with respect to performance considerations, the second approach is preferred. The first method reduces system performance as the desired information must be extracted at least three times from the communication channels. The second method needs to extract the necessary information only once, but the extracted information has to be distributed to the other components. With both approaches an increased security level is achievable, but the second approach is preferred according to the invention.

To realize the adaptability caracteristic the firewall shows the following features according to the invention: Firewall components, e.g. filters or proxies, are enhanced by software interfaces so that they are able to communicate with each other. That way they become enabled to receive missing information about the communication state from another component and may also act as an information source. These firewall components provide an interface, especially a software interface, so that other components are able to manipulate their behaviour if this is necessary. This changes the overall system behaviour and must therefore be done in a secure manner.

According to the invention, the firewall apparatus provides components so that packet streams are routed individually through the firewall system. Therefore, two ways are provided: First, the "routing" can be performed by the components at the edges of the firewall system (i.e. edge components). This requires that the edge components are able to split and reassemble the flows of the multimedia sessions. Therefore the edge components have to support a redirect function e.g. by means of re-writing IP addresses. This redirect functions may act transparently and do not influence the behavior of the involved end systems. To perform the splitting and reassembling of the session flows, edge components have to communicate with components which observe the control channels. The edge components have to split and reassemble the session, the observing component (e.g. a proxy for the control channels) knows about the dependencies of the single flows and has to distribute this information to the filters. Second, the routing can be performed by the proxy. The proxy handles the control flows of the multimedia session Therefore this component is able to modify the data transmitted on the control channels. By modifying the negotiated ports on these channels, the proxy could inform the participating endsystems to send specific flows on diferent ways.

Both methods are used to split the flows of a multimedia session. The first method does this in a transparent way for the endsystems, while the second method does not provide this feature. The first method is therefore practicable in all use cases. To support all communication scenarios, and to be able to keep it simple where possible, both methods are used according to the invention.

The same design requirements as derived from the adaptability caracteristic are also necessary to fulfil the routing caracteristic of the firewall apparatus. Flow information has to be exchanged between components to split and reassemble the flows of the multimedia session.

The internal communication requirements are be met by interconnecting each component with each other. Each of the boxes represents a firewall component with the necessary software enhancements or software interfaces for inter-component communication. Problems arising with this architecture include the task of each of the components to find and keep track about the state of the other components, the varying number of possible links between the components, and portability problems with a system change.

According to the invention, the preferred system structure or architecture provides a central component or core component (or DDFA-core) which forms the central part of the firewall apparatus according to the invention. The core component provides at least one registration mechanism which allows components to announce their presence within the system. The core or core component is then able to provide a location mechanism which enables the components to find each other.

The system enhancement for each firewall component is split in two parts or software interfaces.

The system-dependent part is located, as a software interface, on the component itself.

The system-independent part is located, as a software interface, within the core component.

That way a special additional adaption layer is inserted, which makes it easier to tailor the software. It allows to use different types of components providing the same functionality. The core can also be used to maintain tasks which control and organize the interaction of all interconnected components.

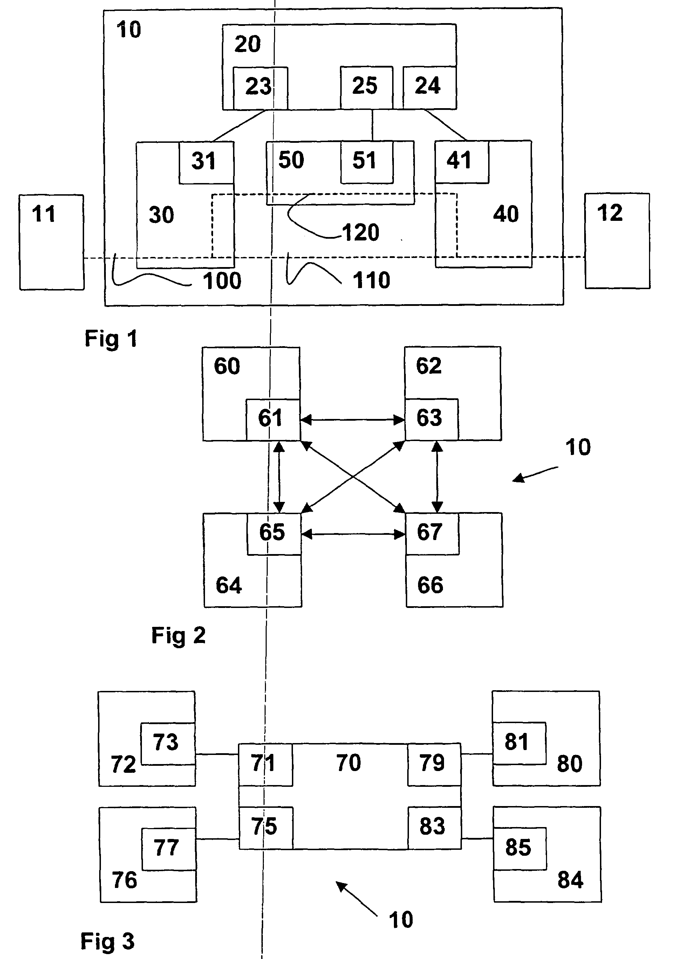

In figure 1 a first embodiment of a firewall architecture, according to the invention, is shown. A firewall apparatus 10 is connected to a first network 11 and a second network 12. The firewall apparatus 10 or simply firewall 10 has to control the data flow between the first an second network 11, 12. For example, the first network 11 is an internal network of an administration, company or the like, and the second network 12 is an external network, e.g. the internet. The internal network is supposed to be protected against unwished data from the external network.

The firewall 10 comprises a proxy 50, a first filter 30, a second filter 40 and a core component 20. The core component 20 is connected to the proxy 50, the first filter and the second filter 40 via software interfaces to control the firewall activities. Therefore, the core component 20 comprises a first software interface 23, a second software interface 25 and a second software interface 24. The first filter 30 comprises a fourth software interface 31 by which it communicates with the first software interface 23 of the core component 20. The proxy 50 comprises a fifth software interface 51 by which it communicates with the second software interface 25 of the core component 20. The second filter 40 comprises a sixth software interface 41 by which it communicates with the third software interface 24 of the core component 20.

The firewall 10 exchanges network data with the first network 11 which constitutes a first flow of data 100. If there are no security objections raised by the firewall 10, the first data flow 100 of network data is also exchanged between the firewall 10 and the second network 12.

The filters 30, 40 of the firewall 10 are connected to exchange at least partially the first flow 100. In the same manner, the proxy 50 communicates with the first filter 30 and with the second filter 40 to exchange at least partially the first flow 100. The first filter 30 and the second filter 40 provide the possibility to split and to reassemble the first flow 100. One part of the first flow 100, which will further be called "second flow 110" is addressed directly from one of the filters 30, 40 to the other.
Another part of the first flow 100, which will further be called "third flow 120", is directed from one of the filters 30, 40 to the other of the filters 30, 40 via the proxy 50. The filters 30, 40 are also called "edge components".

The filters 30, 40 are especially of the type "FreeBSD 3.2" with IP-Filter 3.2.10 and the proxy 50 or proxy component 50 is especially of the type "FreeBSD 3.2" with a self implemented H.323 Proxy and the core 20 or core component 20. Therefore in this example, the firewall apparatus 10 only supports IP-Telephony apllications based on the H.323 protocol.

The core component 20 forms the main component of the firewall 10. The system independent parts of the software interfaces for the firewall components (i.e. the first, second and third software interface 23, 25, 24) are also located there. The following tasks are fulfilled by the core component 20:

The components which participate in the firewall apparatus 10 use the core 20 as a central contact point. The core 20 registers the other components and publishes their presence so that every component can be addressed by all other components.

The core 20 provides a general communication mechanism, so that the components 30, 40, 50 can interact with each other. This communication is coordinated by the core 20, so that requests are submitted and computed in a strict sequential order and an atomic way.

The interaction between the components 30, 40, 50 can be controled and restricted. The core 20 provides access control mechanisms and thus decides which components 30, 40, 50 are allowed to participate in the system.

Protocol specific features: Tasks that are usually located at separate firewall components 30, 40, 50 can dynamically be loaded into the core 20. This is an implementation detail and allows for a higher systems throughput through the efficient use of a single address space.

Control tasks: System startup and individual control functions such as clean-up of component specific data structures are also located at the core 20.

System independent parts: The core 20 provides mechanisms to load the system independent parts of the connected components 30, 40, 50.

The software design of the firewall 10 according to the invention is modular to simplify enhancement of system functionality. The design is flexible to adapt to different firewall policies.

According to the invention different adapters are able to be integrated in the firewall 10 as firewall components. One example of an adapter is used to integrate a filter, another example is intended to integrate an IP-Telephony (based on the H.323 protocol family) proxy. Every adapter consists of a system dependent part, e.g. as software interface, installed on the firewall component itself, and a system independent part, e.g. as software interface, which is loaded as described into the core 20.

An IP-Filter adapter is used to integrate "IP-Filter" packet filters, especially hosted on a FreeBSD operating system, into the firewall apparatus. The system independent part provides a generic interface within the core 20 to access filters in a standardized manner. Other components can reconfigure the filter, redirect streams or request flow information from the filter by using this interface. The system dependent part is hosted on the filter machines. This part is system dependent because it has to communicate with the filter software, the operating system and the network interfaces on the filter host. It translates the standardized commands from the core into the specific language used for the particular filter. Therefore, parts of this system dependent component must be rewritten in most cases when the target operating system or filter software is changed. System dependent and system independent part are connected via a secured TCP link.

An IP-Telephony-Proxy adapter can be used to make H.323 proxy functionality available within the firewall apparatus 10. The system independent part provides an interface, which allows other components to modify the proxy behavior or to receive informations about the flows processed by the proxy. In addition, the proxy uses this interface to communicate with other components.

In figure 2, a second embodiment of a firewall architecture is shown where the firewall 10 is provided so that all components are interconnected with each other. The firewall 10 comprises a first component 60, a second component 62, a third component 64 and a fourth component 66. The first component 60 comprises a seventh software interface 61. The second component 62 comprises a eighth software interface 63. The third component 64 comprises a ninth software interface 65. The fourth component 66 comprises a tenth software interface 67. The components 60, 62, 64, 66 communicates with each other via the software interfaces 61, 63, 65, 67

In Figure 3, a third embodiment of a firewall architecture is shown where the firewall 10 comprises a core component 70 comprising a eleventh software interface 71, a twelveth software interface 75, a thirteenth software interface 79 and a fourteenth software interface 83. Futhermore, the firewall 10 comprises a fifth component 72, a sixth component 76, a seventh component 80 and a eighth component 84. The fifth component 72 is connected to the core component 70 via a fifteenth software interface 73 and the eleventh software interface 71. The sixth component 76 is connected to the core component 70 via a sixteenth software interface 77 and the twelveth software interface 75. The seventh component 80 is connected to the core component 70 via a seventeenth software interface 81 and the thirteenth software interface 79. The eighth component 84 is connected to the core component 70 via a eighteenth software interface 85 and the fourteenth software interface 83.

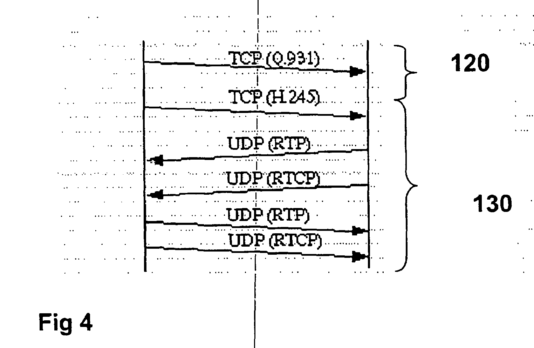

Figure 4 shows a communication example in detail. A representative example of a Multimedia Application supported by the invention is a multimedia data exchange software, like Microsoft NetMeeting . For example, it is used for multimedia conferencing and is based on the H.323 protocol suite. Figure 4 shows the communication mechanism between two H.323 based IP-telephony clients. The time axes runs vertically from top to bottom. In a first time interval 120 the communication proceeds with statically known ports. In a second time interval 130, the communication proceeds with dynamically negotiated ports. In figure 4 the caller (later assumed to be on the internal network behind the firewall) initiates an IP-phone call to the called (later assumed to be on the external network) client. Only audio streams will be considered between both clients. If video streams between the clients are used too, two additional streams (RTCP and RTP) in each direction are added

In a H.323 session like the on depicted in figure 4, two TCP control channels are utilized. The first control channel is employed for call setup and uses the Q.931 protocol. This corresponds to the first time interval 120. The ports used for the second control channel are dynamicaly negotiated on the Q.931 channel, as this corresponds to the second time interval 130. After the second (H.245) control channel is established, this channel is used between the clients to establish the audio and video streams between both clients. The ports used for these flows are negotiated dynamically on the H.245 control channel.

A firewall 10 according to the first embodiment of a firewall architecture (figure 3) handles an application by observing so called boundary conditions: Filter 1 must pass the initial Q.931 (TCP, destination port 1720) connection from the caller to the proxy 50. In addition, all TCP connection attempts, made from the internal client to the external client on port 1720 should be redirected to the proxy 50 . In this case, the application does not need to support a proxy, the proxy is transparently inserted in the communication path.

The calling client tries to connect to the called client via TCP on port 1720 to set up the Q.931 connection. Filter 1 redirects this request to the proxy 50, especially a H.323 proxy. The proxy 50 then asks the first filter 30 component (via its connection to the core component 20) about the state of this flow. As result the proxy 50 gets the information that this connection was primary made to the destination client. The proxy 50 now uses the core 20 connection to inform the second filter 40 that he will connect the destination client on port 1720 via TCP. The second filter 40 adjusts his configuration to allow this connection. The proxy 50 now connects to the destination client and relays and observes the Q.931 connection between both clients.

By observing the Q.931 connection, the proxy 50 recognizes the negotiation of the H.245 connection. To negotiate the H.245 connection, the destination client passes information about the target IP- address and port for the H.245 connection to the calling client. This information is modified by the proxy 50, so that it will receive the connection request for the H.245 connection. Before the proxy 50 passes the modified message to the calling client, it uses the core connection to inform the first filter 30 about the connection that will be made to the proxy 50. The first filter 30 adjusts his filter rules.

The proxy 50 now receives the H.245 connection request. It informs the second filter 40 via the core 20 about the outgoing connection to the destination client. The second filter 40 adjusts its filtering rules. The proxy 50 now connects to the destination client and relays and observes the H.245 connection.

Next the audio data streams are negotiated on the H.245 channel. The proxy 50 observes this communication and informs both filters 30, 40 about the negotiated streams. The filters 30, 40 then change the filter rules according to information passed by the proxy 50. The bulk data are now sent directly between the clients. These data do not have to be relayed by the proxy 50.

When the communication is going to be finished, special messages are sent on the control channels. This is recognized by the proxy 50, and it distributes this information to the filters 30, 40, so that all previous opened paths within the filter rules could be closed. When the communication is finished, the system configuration is again in the state described above in connection with the "Boundary conditions".

One main difference between the standard firewall and the invention is the initial configuration. In the standard system several predefined "holes" within the filter configurations are necessary because an adaption of the system during the communication is not possible. The firewall 10 according to the invention does not need these predefined holes, because the system can open and close the actual necessary paths on all components during the communication. The firewall 10, therefore, allows a more secure operation, regarding the filter configuration, than the standard system.

The firewall 10 according to the invention is also more secure then a standard firewall. A central and consitent view of the policy engine is, however, maintained. An administrator of the firewall 10 will therefore not recognize the difference between configuring the central component in the standard scenario or configuring the firewall 10 according to the invention. Therefore configuration errors could be possible with equal probability in both systems. Because the internal design and implementation of the firewall 10 according to the invention is secure, this system provides a higher security level then the standard one.

Within the firewall 10 according to the invention, the bulk data (audio and video flows) are sent directly via edge filters 30, 40 between the endpoints. In the standard scenario, the audio and video streams are additionally processed by the proxy located between both edge filters. Therefore the firewall apparatus 10 has the following performance advantages: The bulk data are only processed by filters. By avoiding the usage of proxies for the data flows, performance is increased. The bulk data are only processed by two components. By reducing the amount of hops, the performance is increased.

## Claims

1. Firewall apparatus (10) for controlling network data packet traffic between a first network (11) and a second network (12), comprising filtering means (30, 40) and at least one proxy (50), with the filtering means (30, 40) being adaptable by the at least one proxy (50), **characterized in that** the proxy (50) is formed to observe a control channel of the network data packet traffic and to inform the filtering means (30, 40) so the filtering means (30, 40) change their filtering rules to route a data channel of the network data packet traffic between the filtering means (30, 40) without being relayed by the proxy (50).

2. Firewall apparatus (10) according to claim 1, **characterized in that** said at least one proxy is implemented to extract information from the application layer.

3. Firewall apparatus (10) according to anyone of the preceeding claims, **characterized in that** said firewall apparatus (10) provides exchange means to exchange firewall data between said firewall components, where the firewall data are distinct from the network data.

4. Firewall apparatus (10) according to anyone of the preceeding claims, **characterized in that** a flow (100) of multiple network data packets is split by the filtering means.

5. Firewall apparatus (10) according to anyone of the preceeding claims, **characterized in that** said flow (100) of multiple network data packets is reassembled by the filtering means.

6. Firewall apparatus (10) according to anyone of the preceeding claims, **characterized in that** each firewall component is interconnected with each other.

7. Firewall apparatus (10) according to anyone of claims 1 to 5, **characterized in that** said firewall apparatus (10) comprises one central component (20) and at least two other components (30, 40), where the central component (20) is interconnected with each of the other components (30, 40).

8. Firewall apparatus (10) according to claim 7, **characterized in that** said firewall apparatus (10) provides a registration mechanism in order to add another component to said firewall apparatus (10).

9. Firewall apparatus (10) according to claim 8, **characterized in that** the core component (20) registers the other firewall components.

10. Firewall apparatus (10) according to anyone of the preceeding claims, **characterized in that** at least one of the filtering means (30, 40) is provided as an IP filter.

11. Firewall apparatus (10) according to anyone of the preceeding claims, **characterized in that** at least one proxy (50) is provided as an IP telephony proxy.

## Patentansprüche

1. Firewall-Vorrichtung (10) zum Steuern des Verkehrs von Datenpaketen eines Netzwerks zwischen einem ersten Netzwerk (11) und einem zweiten Netzwerk (12), umfassend Filtermittel (30, 40) und zumindest einen Proxy (50), wobei die Filtermittel (30, 40) durch den mindestens einen Proxy anpassbar sind, **dadurch gekennzeichnet, dass** der Proxy (50) derart ausgestaltet ist, dass er einen Steuerkanal des Verkehrs von Datenpaketen des Netzwerks überwacht und die Filtermittel (30, 40) benachrichtigt, so dass die Filtermittel (30, 40) ihre Filterregeln derart ändern, dass ein Datenkanal des Verkehrs von Datenpaketen des Netzwerks zwischen den Filtermitteln (30, 40) geroutet wird, ohne dabei durch den Proxy (50) weitergeleitet zu werden.

2. Firewall-Vorrichtung (10) nach Anspruch 1, **dadurch gekennzeichnet, dass** zumindest ein Proxy derart ausgeführt ist, dass er Informationen aus der Anwendungsebene extrahiert.

3. Firewall-Vorrichtung (10) nach einem der vorstehenden Ansprüche, **dadurch gekennzeichnet, dass** die Firewall-Vorrichtung (10) Austauschmittel bereithält, um Firewall-Daten zwischen den Firewall-Komponenten auszutauschen, wobei die Firewall-Daten von den Netzwerkdaten verschieden sind.

4. Firewall-Vorrichtung (10) nach einem der vorstehenden Ansprüche, **dadurch gekennzeichnet, dass** ein Strom (100) verschiedenartiger Datenpakete des Netzwerks durch die Filtermittel aufgespalten wird.

5. Firewall-Vorrichtung (10) nach einem der vorstehenden Ansprüche, **dadurch gekennzeichnet, dass** der Strom (100) verschiedenartiger Datenpakete des Netzwerks durch die Filtermittel wieder zusammengesetzt wird.

6. Firewall-Vorrichtung (10) nach einem der vorstehenden Ansprüche, **dadurch gekennzeichnet, dass** jede der Firewall-Komponenten mit jeder anderen verbunden ist.

7. Firewall-Vorrichtung (10) nach einem der Ansprüche 1 bis 5, **dadurch gekennzeichnet, dass** die Firewall-Vorrichtung eine zentrale Komponente (20) und zumindest zwei weitere Komponenten (30, 40) umfasst, wobei die zentrale Komponente (20) mit jeder der weiteren Komponenten (30, 40) verbunden ist.

8. Firewall-Vorrichtung (10) nach Anspruch 7, **dadurch gekennzeichnet, dass** die Firewall-Vorrichtung (10) mit einem Registrierungsmechanismus ausgestattet ist, so dass eine weitere Komponente zu der Firewall-Vorrichtung (10) hinzugefügt werden kann.

9. Firewall-Vorrichtung (10) nach Anspruch 8, **dadurch gekennzeichnet, dass** die zentrale Komponente (20) die anderen Firewall-Komponenten registriert.

10. Firewall-Vorrichtung (10) nach einem der vorstehenden Ansprüche, **dadurch gekennzeichnet, dass** zumindest eines der Filtermittel (30, 40) als IP-Filter ausgeführt ist.

11. Firewall-Vorrichtung (10) nach einem der vorstehenden Ansprüche, **dadurch gekennzeichnet, dass** zumindest ein Proxy als Proxy für IP-Telefonie ausgeführt ist.

## Revendications

1. Dispositif pare-feu (10) pour réguler le trafic de paquets de données réseau entre un premier réseau (11) et un second réseau (12), comprenant des moyens de filtrage (30, 40) et au moins un serveur mandataire (50), les moyens de filtrage (30, 40) pouvant être adaptés par l'au moins un serveur mandataire (50), **caractérisé en ce que** le serveur mandataire (50) est conçu pour observer un canal de commande du trafic de paquets de données réseau et informer les moyens de filtrage (30, 40), de façon à ce que les moyens de filtrage (30, 40) changent leurs règles de filtrage afin qu'un canal de données du trafic de paquets de données réseau soit acheminé entre les moyens de filtrage (30, 40) sans être relayé par le serveur mandataire (50).

2. Dispositif pare-feu (10) selon la revendication 1, **caractérisé en ce que** l'au moins un serveur mandataire est mis en oeuvre de façon à extraire des informations de la couche application.

3. Dispositif pare-feu (10) selon l'une quelconque des revendications précédentes, **caractérisé en ce que** le dispositif pare-feu (10) comporte des moyens d'échange pour l'échange de données de pare-feu entre les composants du pare-feu, où les données de pare-feu sont distinctes des données réseau.

4. Dispositif pare-feu (10) selon l'une quelconque des revendications précédentes, **caractérisé en ce qu'**un flot (100) de plusieurs paquets de données réseau est divisé par les moyens de filtrage.

5. Dispositif pare-feu (10) selon l'une quelconque des revendications précédentes, **caractérisé en ce que** le flot (100) de plusieurs paquets de données réseau est réassemblé par les moyens de filtrage.

6. Dispositif pare-feu (10) selon l'une quelconque des revendications précédentes, **caractérisé en ce que** tous les composants du pare-feu sont interconnectés entre eux.

7. Dispositif pare-feu (10) selon l'une quelconque des revendications 1 à 5, **caractérisé en ce que** le dispositif pare-feu (10) comprend un composant central (20) et au moins deux autres composants (30, 40), le composant central (20) étant interconnecté avec chacun des autres composants (30, 40).

8. Dispositif pare-feu (10) selon la revendication 7, **caractérisé en ce que** le dispositif pare-feu (10) comprend un mécanisme d'enregistrement afin d'ajouter un autre composant au dispositif pare-feu (10).

9. Dispositif pare-feu (10) selon la revendication 8, **caractérisé en ce que** le composant de coeur (20) enregistre les autres composants du pare-feu.

10. Dispositif pare-feu (10) selon l'une quelconque des revendications précédentes, **caractérisé en ce qu'**au moins l'un des moyens de filtrage (30, 40) se présente sous la forme d'un filtre IP.

11. Dispositif pare-feu (10) selon l'une quelconque des revendications précédentes, **caractérisé en ce qu'**au moins un serveur mandataire (50) se présente sous la forme d'un serveur mandataire de téléphonie IP.
